# EUROPÄISCHE PATENTSCHRIFT

(11) **EP 0 648 406 B1**
(45) Veröffentlichungstag und Bekanntmachung des Hinweises auf die Patenterteilung: **03.12.1997**
(21) Anmeldenummer: 94112946.2
(22) Anmeldetag: 19.08.1994
(51) Int. Cl.: A01D 34/68

(54) **Lagerung für den Messerträger eines Rasenmähers**
Bearing device for the blade-holders of a lawnmower
Dispositif paliere pour les porte-lames d'une tondeuse à gazon

(30) Priorität: 15.10.1993 DE 4335240
(43) Veröffentlichungstag der Anmeldung: 19.04.1995
(73) Patentinhaber: OUTILS WOLF, 67160 Wissembourg (FR)
(72) Erfinder:
(74) Vertreter: Brommer, Hans Joachim, Dr.-Ing.

(56) Entgegenhaltungen:
- FR-A- 1 509 682
- FR-A- 2 298 265
- US-A- 2 885 873
- US-A- 3 252 304
- US-A- 3 414 094
- US-A- 4 295 327
- US-A- 4 362 004
- US-A- 4 570 766
- US-A- 5 119 918

## Beschreibung

Die Erfindung betrifft einen Rasenmäher mit einem Gehäuse und mit einem an einer Antriebswelle gelagerten horizontal rotierenden über eine lösbare Kupplung angetriebenen Messerträger, wobei der drehbar zur Antriebswelle gelagerte Messerträger beim Aufprall auf ein Hindernis in Umfangsrichtung durchrutscht, indem er über Federelemente mit einem axial verstellbaren Mitnehmerring verbunden ist, der einerseits durch die Federelemente gegen eine am Gehäuse montierte Bremsfläche gedrückt wird und der andererseits elektromagnetisch von der Bremsfläche abhebbar und in Wirkverbindung mit der Antriebswelle zu bringen ist.

Derartige Rasenmäher sind der Anmelderin bekannt. Dabei stellt die Magnetkupplung eine reibschlüssige Verbindung dar, die beim Aufprall des Messers gegen ein massives Hinderniss durchrutschen kann und die außerdem beim Loslassen des sogenannten Totmannschalters oder beim Umschalten des Antriebsmotors auf Leerlauf den Messerträger abkoppelt, so daß er in kurzer Zeit zum Stillstand kommt.

Eine andere Lagerung des Messerträgers ist durch die FR-C-1 509 682 bekannt. Dabei ist der Messerträger glockenförmig ausgebildet und wird durch mehrere Tellerfedern mit seinem kalottenförmigen Rand an eine entsprechende Gegenfläche eines Mitnehmers gepreßt. Dadurch entsteht eine Rutschkupplung zwischen beiden Teilen, die beim Auftreffen des Messers gegen ein starres Hindernis eine Relativdrehung des Messerträgers wie auch eine angulare Ausweichbewegung relativ zur Antriebswelle gestattet. Ein gewolltes Abkoppeln des Messerträgers von seinem Antrieb ist damit jedoch nicht möglich.

Die vorliegende Erfindung befaßt sich mit der Aufgabe, die beschriebene Lagerung dahingehend zu verbessern, daß der Messerträger beim Loslassen des sogenannten Totmannschalters oder beim Abschalten des Antriebsmotors nicht mehr nachläuft sondern in wesentlich kürzerer Zeit als bisher zum Stillstand gebracht wird. Darüber hinaus wird angestrebt, daß der Messerträger beim Aufprall auf ein Hindernis angular ausweichen kann. Dabei soll sich die gesuchte Konstruktion durch kompakten, kostengünstigen Aufbau sowie durch Robustheit und Zuverlässigkeit auszeichnen.

Diese Aufgabe wird erfindungsgemäß dadurch gelöst, daß der Messerträger durch eine Pendellagerung angular relativ zur Antriebswelle ausweichen kann und die genannten Federelemente auch für die Rückstellung des Messerträgers verantwortlich sind.

Die Erfindung kombiniert eine Magnetkupplung, bei der der Messerträger beim Auskuppeln automatisch gegen eine Bremsfläche gedrückt und somit in kürzester Zeit abgebremst wird, mit einer Pendellagerung, die das angulare Ausweichen des Messerträgers relativ zur Antriebswelle gestattet, so daß die Biegebelastung der Antriebswelle erheblich reduziert wird. Diese Kombination zeichnet sich dadurch aus, daß für das Auskuppeln des Messerträgers einerseits und für seine angulare Rückstellung in die lotrechte Position andererseits ein und dieselben Federelemente verwendet werden. Man erhält dadurch eine außerordentlich kompakte, kostengünstige und zuverlässige Konstruktion.

Zweckmäßig bestehen die Federelemente aus mehreren etwa horizontal in Umfangsrichtung angeordneten Blattfedern, so daß man keine zusätzliche Bauhöhe in Axialrichtung benötigt.

Der Mitnehmerring ist vorzugsweise an der Unter- wie auch an der Oberseite plan und bietet somit genügend Kontaktflächen, um mit entsprechenden Gegenflächen, wahlweise der Antriebswelle oder der Bremsfläche in Anlage zu kommen.

Um den Mitnehmerring in Wirkverbindung mit der Antriebswelle zu bringen, empfiehlt es sich, eine ortsfeste, ringförmige Magnetspule zu verwenden, die ihn gegen einen mit der Antriebswelle verbundenen Ring preßt.

Damit die wirksame Anpreßkraft zwischen dem Mitnehmerring einerseits und dem mit der Antriebswelle umlaufenden Ring andererseits justiert werden kann, empfiehlt es sich, die Bremsfläche axial verstellbar am Gehäuse zu lagern. Man kann damit die wirksame Federkraft, die der elektromagnetischen Anpreßkraft entgegengerichtet ist, verringern oder erhöhen und somit die Wirkung der elektromagnetischen Anpressung beeinflussen.

Um dem Messerträger das Ausweichen aus der lotrechten Position zu gestatten, ist er zweckmäßig über ein Pendelwälzlager direkt oder mittelbar auf der Antriebswelle gelagert.

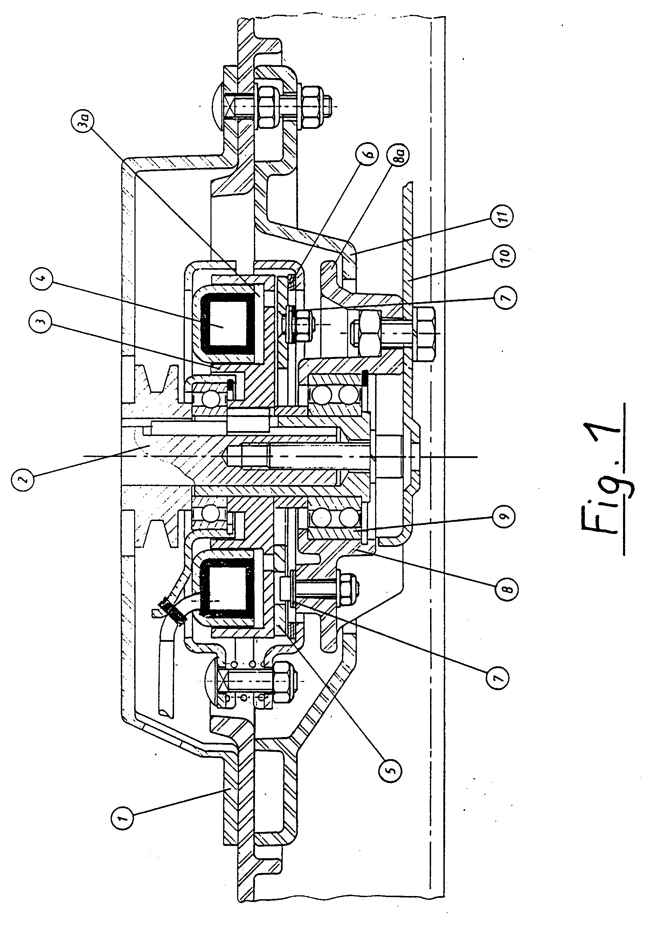

Weitere Merkmale und Vorteile der Erfindung ergeben sich aus der nachfolgenden Beschreibung eines Ausführungsbeispieles anhand der Zeichnung; dabei zeigt
- Figur 1: einen Vertikalschnitt im Kupplungsbereich zwischen Antriebswelle und Messer und
- Figur 2: eine Draufsicht auf die Kupplung.

Ein Ausschnitt des unteren Gehäusebereiches eines Rasenmähers ist mit 1 bezeichnet. In ihm ist eine Antriebswelle 2, die mit einem weiter oben angeordneten Motor verbunden ist, drehbar gelagert. Mit der Welle 2 ist ein Ring 3 drehfest verbunden. Er weist an seiner Oberseite eine Ringnut 3a auf, in der ein ringförmiger Elektromagnet 4 untergebracht ist. Der Elektromagnet 4 steht jedoch nicht in fester Verbindung mit dem Ring 3 sondern ist undrehbar am Gehäuse 1 festgelegt. Er wirkt zusammen mit einem Mitnehmerring 5, der unterhalb des Ringes 3 angeordnet ist. Er kann aus der in der linken Zeichnungshälfte gezeigten oberen Position, wo er sich in Anlage am Ring 3 befindet, in die in der rechten Bildhälfte gezeigte untere Position verstellt werden, wo er an einem ringförmigen Bremsbelag 6 anliegt.

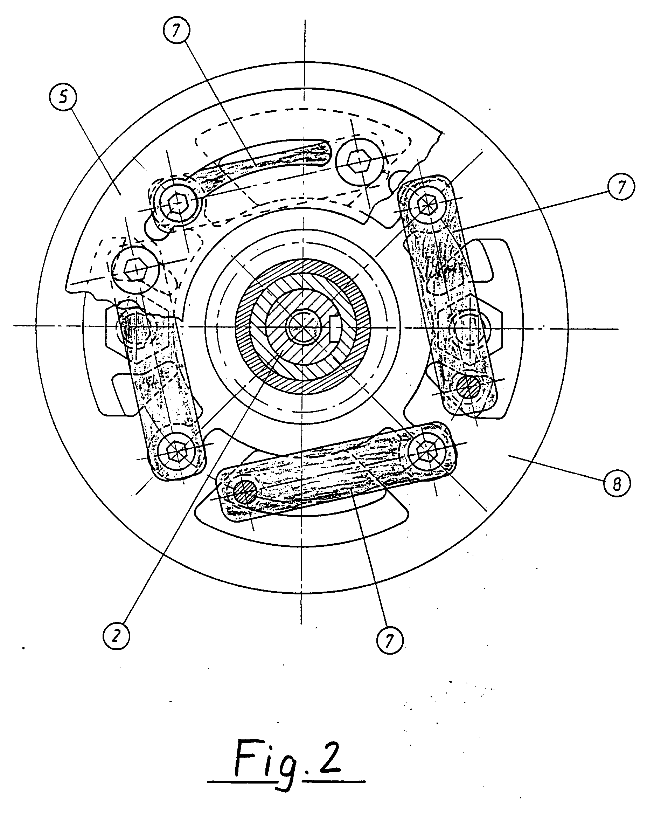

Zu diesem Zweck ist der Mitnehmerring 5 über zahlreiche Blattfedern 7 axial elastisch mit einem Messerträger 8 verbunden. Die Blattfedern 7 sind gemäß Figur 2 in Umfangsrichtung verteilt angeordnet und jeweils an ihrem einen Ende mit dem Mitnehmerring 5, an ihrem anderen Ende mit dem Messerträger 8 verschraubt. Sie haben das Bestreben, den Mitnehmerring 5 nach unten gegen den Bremsbelag 6 zu drücken.

Der Messerträger 8 ist seinerseits über ein Pendelrollenlager 9 verdrehbar und angular ausschwenkbar auf der Antriebswelle 2 gelagert. Er trägt in seinem unteren Bereich ein oder mehrere Messer 10.

Die Funktion ist folgende: Beim Betrieb des Rasenmähers steht der Elektromagnet 4 unter Strom und zieht den Mitnehmerring 5 nach oben, so daß er an dem mit der Antriebswelle 2 verbundenen Ring 3 flächig anliegt und durch Reibschluß - gegebenenfalls durch nicht näher dargestellte Beläge unterstützt - von dem rotierenden Ring 3 mitgenommen wird. Diese Drehbewegung des Mitnehmerringes 5 wird durch die Blattfedern 7 auf den Messerträger 8 und somit auf das Messer 10 übertragen.

Wird der Antriebsmotor des Rasenmähers abgestellt oder auf Leerlauf gestellt, so wird der Elektromagnet 4 automatisch stromlos geschaltet, wodurch die Blattfedern 7 den Mitnehmerring 5 sofort aus seiner Wirkverbindung mit der Antriebswelle lösen und ihn gegen den Bremsbelag 6 drücken. Der Messerträger wird dadurch in wenigen Sekunden zum Stillstand gebracht. Der Benutzer kann also unmittelbar nach dem Abschalten oder auf Leerlaufschalten des Antriebsmotors den Rasenmäher von unten inspizieren bzw. reinigen, ohne durch das ansonsten noch nachlaufende Messer gefährdet zu sein.

Darüber hinaus haben die Blattfedern 7 auch noch eine Ausrichtfunktion für den Messerträger 8. Trifft nämlich das Messer 10 auf ein Hindernis, so bewirkt die Trägheitskraft des Messers aufgrund seines Höhenversatzes relativ zu seinem Lager 9 ein Biegemoment im Sinne einer angularen Auslenkung aus der Achse der Antriebswelle 2 heraus. Diese angulare Auslenkung wird durch das Pendellager 9 gestattet, so daß die Antriebswelle 2 frei von diesen Biegekräften bleibt. Dabei kommt es jedoch an den Blattfedern 7 zu einer Auslenkung, so daß diese bestrebt sind, den Messerträger 8 wieder in seine Normalposition zurückzuschwenken.

Damit die beschriebene Auslenkbewegung in bestimmten Grenzen bleibt, ist an der Gehäuseunterseite ein Anschlagring 11 vorgesehen, der mit einem entsprechenden Bund 8a des Mitnehmerringes korrespondiert und die Auslenkbewegung nach unten oder zur Seite begrenzt, wogegen die Auslenkbewegung nach oben durch den Ring 3 begrenzt wird.

Zusammenfassend bietet also die Erfindung eine kompakte Sicherheitskupplung, die ein sekundenschnelles Abbremsen des Schneidmessers garantiert, sobald der Antriebsmotor auf Leerlauf oder abgeschaltet wird und die darüber hinaus beim Aufprall eines Hindernisses ein Durchrutschen wie auch ein seitliches Auspendeln des Messerträgers gestattet.

## Patentansprüche

1. Rasenmäher mit einem Gehäuse (1) und mit einem an einer Antriebswelle (2) gelagerten horizontal rotierenden über eine lösbare Kupplung angetriebenen Messerträger (8), wobei der drehbar zur Antriebswelle (2) gelagerte Messerträger (8) beim Aufprall auf ein Hindernis durchrutscht, und
über Federelemente (7) mit einem axial verstellbaren Mitnehmerring (5) verbunden ist, der einerseits durch die Federelemente (7) gegen eine am Gehäuse (1) montierte Bremsfläche (6) gedrückt wird und der andererseits elektromagnetisch von der Bremsfläche (6) abhebbar und in Wirkverbindung mit der Antriebswelle (2) zu bringen ist,
dadurch gekennzeichnet,
daß der Messerträger (8) durch eine Pendellagerung (9) angular relativ zur Antriebswelle (2) ausweichen kann und die genannten Federelemente (7) auch für die Rückstellung des Messerträgers (8) verantwortlich sind.

2. Rasenmäher nach Anspruch 1,
dadurch gekennzeichnet,
daß die Federelemente (7) aus mehreren etwa horizontal in Umfangsrichtung angeordneten Blattfedern bestehen.

3. Rasenmäher nach Anspruch 1,
dadurch gekennzeichnet,
daß der Mitnehmerring (5) untere und obere Planseiten aufweist, die in Anlage mit entsprechenden Planseiten der Bremsfläche (6) bzw. eines mit der Antriebswelle (2) verbundenen Ringes (3) gelangen.

4. Rasenmäher nach Anspruch 3,
dadurch gekennzeichnet,
daß benachbart zu dem Ring (3) ein ortsfester, ringförmiger Elektromagnet (4) angeordnet ist, der mit der Mitnehmerscheibe (5) zusammenwirkt.

5. Rasenmäher nach Anspruch 1,
dadurch gekennzeichnet,
daß die Bremsfläche (6) axial verstellbar am Gehäuse (1) montiert ist.

6. Rasenmäher nach Anspruch 1,
dadurch gekennzeichnet,
daß der Messerträger (8) über ein Pendelwälzlager (9) direkt oder mittelbar auf der Antriebswelle (2) gelagert ist.

7. Rasenmäher nach Anspruch 6,
dadurch gekennzeichnet,
daß die angulare Ausweichbewegung des Messerträgers (8) durch einen Anschlag (11) begrenzt ist.

## Claims

1. Lawn mower having a housing (1) and having a horizontally rotating blade holder (8) mounted on a drive shaft (2) and driven by way of a releasable coupling, the blade holder (8), which is mounted to be rotatable relative to the drive shaft (2), sliding in the event of a collision with an obstruction and being connected by way of spring elements (7) to an axially displaceable drive ring (5) which on the one hand is pressed by the spring elements (7) against a braking surface (6) mounted on the housing (1) and which on the other hand is arranged to be lifted electro-magnetically away from the braking surface (6) and brought into operative connection with the drive shaft (2), **characterised in that** by means of a pendulum bearing (9) the blade holder (8) is able to be deflected angularly with respect to the drive shaft (2), and the said spring elements (7) are responsible also for the resetting of the blade holder (8).

2. Lawn mower according to claim 1, **characterised in that** the spring elements (7) consist of a plurality of leaf springs arranged approximately horizontally in the circumferential direction.

3. Lawn mower according to claim 1, **characterised in that** the drive ring (5) has lower and upper planar faces which come to bear against corresponding planar faces of the braking surface (6) or of a ring (3) connected to the drive shaft (2).

4. Lawn mower according to claim 3, **characterised in that** adjacent to the ring (3) there is arranged a stationary ring-shaped electromagnet (4) which cooperates with the drive disc (5).

5. Lawn mower according to claim 1, **characterised in that** the braking surface (6) is mounted to be axially displaceable on the housing (1).

6. Lawn mower according to claim 1, **characterised in that** the blade holder (8) is mounted directly or indirectly on the drive shaft (2) by means of a pendulum roller bearing (9).

7. Lawn mower according to claim 6, **characterised in that** the angular displacement of the blade holder (8) is limited by a stop (11).

## Revendications

1. Tondeuse à gazon comprenant un carter (1) et un support de couteaux (8) monté sur un arbre menant (2), tournant horizontalement et entraîné par le biais d'un accouplement débrayable, sachant que le support de couteaux (8) monté de manière rotative par rapport à l'arbre menant (2) peut patiner lorsqu'il heurte un obstacle et est relié par le biais d'éléments à ressort (7) à une bague d'accouplement (5) mobile axialement, laquelle est, d'une part, appuyée par les éléments à ressort (7) contre une surface de freinage (6) montée sur le carter (1) et peut, d'autre part, être écartée de la surface de freinage (6) par un système électromagnétique et mise en liaison active avec l'arbre menant (2), caractérisée en ce que le support de couteaux (8) peut dévier de façon angulaire par rapport à l'arbre menant (2) par le biais d'un palier à rotule (9), et en ce que lesdits éléments à ressort (7) assurent également le retour à la position initiale du support de couteaux (8).

2. Tondeuse à gazon selon la revendication 1, caractérisée en ce que les éléments à ressort (7) sont composés de plusieurs ressorts à lame disposés à peu prés horizontalement selon une orientation périphérique.

3. Tondeuse à gazon selon la revendication 1, caractérisée en ce que la bague d'accouplement (5) présente des faces planes inférieure et supérieure qui viennent s'appliquer contre des faces planes correspondantes de la surface de freinage (6) ou d'une bague (3) reliée à l'arbre menant (2).

4. Tondeuse à gazon selon la revendication 3, caractérisée en ce qu'au voisinage de la bague (3) est disposé un électro-aimant annulaire stationnaire (4) qui coopère avec la bague d'accouplement (5).

5. Tondeuse à gazon selon la revendication 1, caractérisée en ce que la surface de freinage (6) est montée sur le carter (1) de façon à être réglable axialement.

6. Tondeuse à gazon selon la revendication 1, caractérisée en ce que le support de couteaux (8) est monté sur l'arbre menant (2) directement ou indirectement par le biais d'un palier à roulement (9).

7. Tondeuse à gazon selon la revendication 6, caractérisée en ce que le mouvement de déviation angulaire du support de couteaux (8) est limité par une butée (11).
